# EUROPEAN PATENT APPLICATION

(11) **EP 2 753 071 A2**
(43) Date of publication of application: **09.07.2014**
(21) Application number: 13199889.0
(22) Date of filing: 31.12.2013
(51) Int. Cl.: H04N 5/33

(54) **Thermal camera and method for eliminating ghosting effects of hot-target thermal images**

(30) Priority: 03.01.2013 US 201313733647
(71) Applicant: Fluke Corporation, Everett, WA 98203 (US)
(72) Inventor: Schmidt, Matthew F., River Falls, WI Wisconsin 54022 (US); Mumaw, David T., Minneapolis, MN Minnesota 55401 (US)
(74) Representative: Howe, Steven

(57) **Abstract**

Various apparatuses and methods for compensating for ghosting effects in thermal imaging devices are disclosed. Offsets in thermal image data due to ghosting effects on thermal sensors may be modeled, predicted, and/or eliminated by various embodiments of the present invention. These models may be time-varying to compensate for dynamic offset behavior, and may be based on formulas, lookup tables, or the like. Predicted offset amounts may be compensated for in various ways in order to produce more accurate thermal image data free from accumulated offset.

## Description

### BACKGROUND

Thermal imaging cameras are used in a variety of situations. For example, thermal imaging cameras are often used during maintenance inspections to thermally inspect equipment. Example equipment may include rotating machinery, electrical panels, or rows of circuit breakers, among other types of equipment. Thermal inspections can detect equipment hot spots such as overheating machinery or electrical components, helping to ensure timely repair or replacement of the overheating equipment before a more significant problem develops.

Depending on the configuration of the camera, the thermal imaging camera may also generate a visible light image of the same object. The camera may display the infrared image and the visible light image in a coordinated manner, for example, to help an operator interpret the thermal image generated by the thermal imaging camera. Unlike visible light images which generally provide good contrast between different objects, it is often difficult to recognize and distinguish different features in a thermal image as compared to the real-world scene.

Thermal imaging of a sufficiently hot target may result in the development of an error in the measured signal sometimes known as "ghosting." This ghosting may cause image artifacts and inaccuracies during measurement which may be unacceptable to the user.

### SUMMARY

In general, this disclosure is directed to a thermal imaging camera and method used to predict and compensate for this time-varying ghosting effect, eliminating the inaccuracy stemming therefrom.

Various methods and apparatuses fall within the scope of the present invention. Certain embodiments of the present invention include a thermal imaging camera comprising at least one infrared sensor element and a processor. The at least one infrared sensor element is configured to provide an electrical signal in response to receiving infrared energy corresponding to a heat pattern of a thermal scene. The processor receives these electrical signals generates thermal image data from the signal. Additionally, the processor may predict an amount of offset that may be incorporated into the thermal image data after a time of exposing the camera to the thermal scene. After predicting the amount of offset, the processor may then remove the offset from the data.

Another aspect of certain embodiments of the invention provides methods for eliminating ghosting effects in a thermal imaging device. The method comprises exposing a thermal imaging device to a thermal scene and measuring a heat pattern thereacross. The method further comprises the steps of generating thermal image data corresponding to the measured heat pattern and predicting an amount of offset that will be incorporated into the thermal image data after exposing the device to the scene for a time. In a particular embodiment of the invention, the method further comprises removing the offset from the thermal image data.

In certain embodiments, the method comprises exposing a thermal imaging device to a thermal scene and measuring a heat pattern thereacross using a plurality of infrared sensors. Similarly to the previously described embodiment, the method further comprises generating thermal image data corresponding to the heat pattern and predicting an amount of offset that will be incorporated into the thermal image data after exposing the device to the scene for a time. In this embodiment, the method further comprises biasing the infrared sensing elements in such a way so as to effectively remove the predicted offset from the generated thermal image data.

Embodiments of the invention may comprise time-dependent models predicting the offset behavior. Models may comprise lookup tables, formulas, or other means known in the art. In certain embodiments offset data may be tracked and stored for future use.

According to a first aspect of the present invention, there is provided a method for eliminating hot-target ghosting effects in a thermal imaging device, comprising:
exposing the thermal imaging device to a thermal scene,
measuring a heat pattern across the scene,
generating thermal image data corresponding to said heat pattern,
predicting an amount of offset that will be incorporated into the thermal image data after a given time of exposing the thermal imaging device to the scene, and
removing said offset from the thermal image data.

Measuring the heat pattern of the scene may comprise a radiometric measurement, and in this case the offset may comprise a temperature offset.

The method may further comprised the step of displaying the thermal image from the corrected thermal image data with the offset removed.

Removing the offset from thermal image data may comprise subtracting the predicted offset from the measured value.

The thermal imaging device may include a focal plane array (FPA) comprised of an array of pixels, with the offset being predicted for and removed from each pixel.

The method may further comprise changing the amount of offset removed from the thermal image data over time. In this case, the removed offset amount may be changed before each time a new scene is captured. The change may follow an exponential relationship with time, wherein the exponential relationship may comprise a temperature-independent time constant.

Predicting the offset may comprise a temporal integral of the thermal image data acquired by the camera during exposure to the scene.

The method may further comprise predicting and removing an offset value from every frame.

The method may further comprise a threshold level within the thermal image data below which it is assumed no offset accumulates. The amount of offset may be proportional to the number of frames above the threshold level.

The method may further comprise a saturation offset level corresponding to each heat pattern measurement. The saturation offset levels may be stored in a lookup table.

According to a second aspect of the present invention, there is provided a thermal imaging camera configured to measure a heat pattern across a thermal scene, the camera comprising:
at least one infrared sensor element configured to provide an electrical signal in response to receiving infrared energy corresponding to a heat pattern across the scene,
a processor for receiving said electrical signal from the at least one infrared sensor element and
generating thermal image data from said signal, the processor also configured to:
   predict an amount of offset that will be incorporated into the thermal image data after a given time of exposing the camera to the thermal scene, and
   remove the predicted offset from the thermal image data.

The camera may be configured to generate and display a thermal image from the thermal image data with the offset removed.

The camera may be configured to make radiometric measurements, in which case the offset may comprise a temperature offset.

Predicting the amount of offset may comprise a saturation offset corresponding with each heat pattern measurement. In this case, the camera may include memory for storing at least one of historical offset data and a lookup table comprising saturation offset values.

According to a third aspect of the present invention, there is provided a method for eliminating hot-target ghosting effects in a thermal imaging device, comprising:
exposing the thermal imaging device to a thermal scene,
measuring a heat pattern across the scene with a plurality of infrared sensing elements,
generating thermal image data corresponding to said heat pattern,
predicting an amount of offset that will be incorporated into the thermal image data after a given time of exposing the camera to the scene, and
biasing said infrared sensing elements in such a way so as to effectively remove the predicted offset from the generated thermal image data.

The method may further comprise the step of generating and displaying an image from the thermal image data.

The details of one or more examples of the invention are set forth in the accompanying drawings and the description below. Other features, objects, and advantages will be apparent from the description and drawings, and from the claims.

### BRIEF DESCRIPTION OF DRAWINGS

FIG. 1 is a perspective front view of a thermal imaging camera according to some embodiments.
FIG. 2 is a perspective back view of the thermal imaging camera of FIG. 1.
FIG. 3 is a functional block diagram illustrating components of thermal imaging cameras according to some embodiments.
FIG. 4 is a process flow diagram showing steps of a ghosting offset developing and decaying over time.
FIG. 5 is an exemplary plot of a true target temperature, a measured temperature, and a compensated temperature vs. time while compensated temperature does not take into account changing offset values.
FIG. 6 is a process flow diagram outlining steps taken to compensate for a changing temperature offset.
FIG. 7 shows exemplary plots of a target temperature vs. time as well as the corresponding offset saturation and true offset temperatures vs. time, plotted against the same temporal axis, and wherein the target temperature remains steady long enough for the offset value to approach the saturation value.
FIG. 8 shows exemplary plots of a target temperature vs. time as well as the corresponding offset saturation and true offset temperatures vs. time, plotted against the same temporal axis, and wherein the target temperature does not always remain steady long enough for the offset value to approach the saturation value.

### DETAILED DESCRIPTION

The following detailed description is exemplary in nature and is not intended to limit the scope, applicability, or configuration of the invention in any way. Rather, the following description provides some practical illustrations for implementing various embodiments of the present invention. Examples of constructions, materials, dimensions, and manufacturing processes are provided for selected elements, and all other elements employ that which is known to those of ordinary skill in the field of the invention. Those skilled in the art will recognize that many of the noted examples have a variety of suitable alternatives.

A thermal imaging camera may be used to detect heat patterns across a scene, including an object or objects, under observation. The thermal imaging camera may detect infrared radiation given off by the scene and convert the infrared radiation into an infrared image indicative of the heat patterns. In some embodiments, the thermal imaging camera may also capture visible light from the scene and convert the visible light into a visible light image. Depending on the configuration of the thermal imaging camera, the camera may include infrared optics to focus the infrared radiation on an infrared sensor and visible light optics to focus the visible light on a visible light sensor.

Various embodiments of the invention provide methods and systems for compensating for the ghosting effects by using a mathematical model to predict the amount of ghosting and removing the predicted ghosting error from each thermal image.

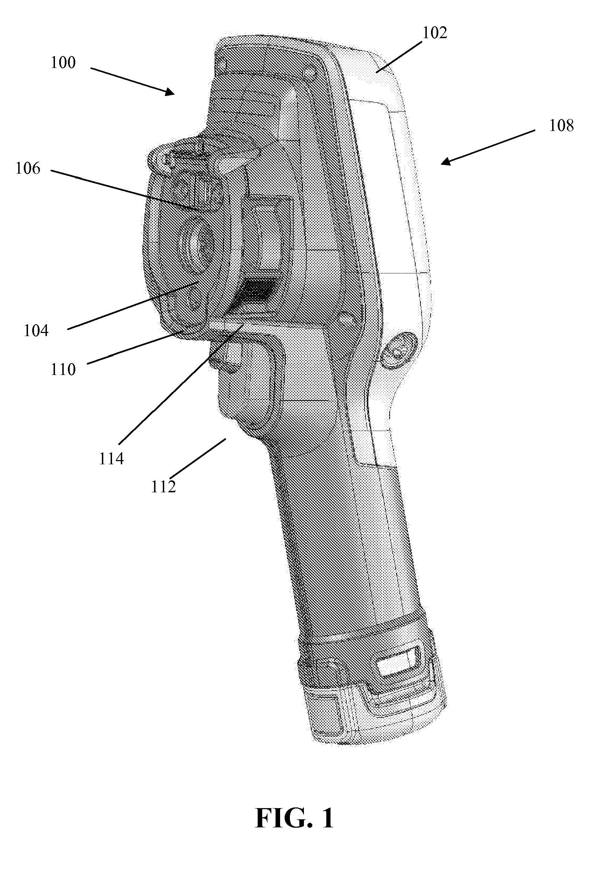

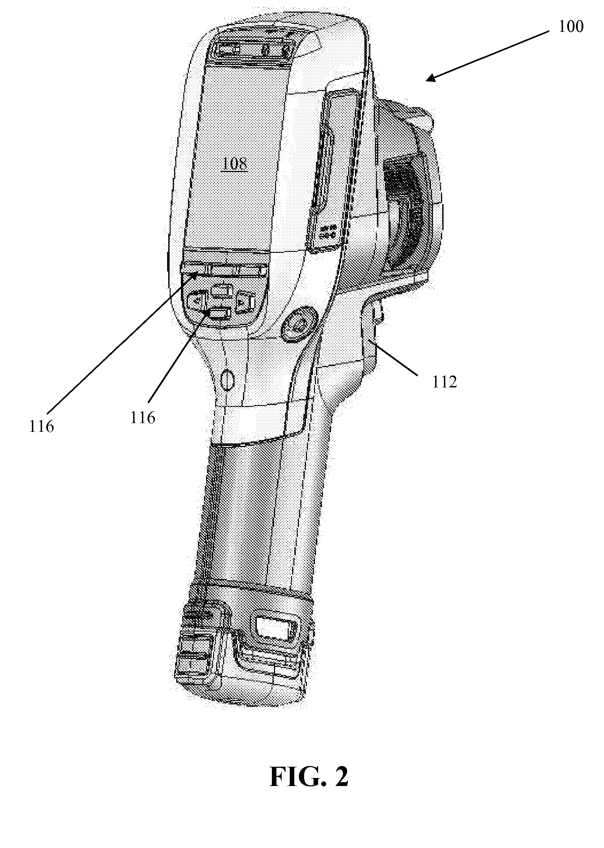

FIGS. 1 and 2 show front and back perspective views, respectively of an example thermal imaging camera 100, which includes a housing 102, an infrared lens assembly 104, a visible light lens assembly 106, a display 108, a laser 110, and a trigger control 112. Housing 102 houses the various components of thermal imaging camera 100. The bottom portion of thermal imaging camera 100 includes a carrying handle for holding and operating the camera via one hand. Infrared lens assembly 104 receives infrared radiation from a scene and focuses the radiation on an infrared sensor for generating an infrared image of a scene. Visible light lens assembly 106 receives visible light from a scene and focuses the visible light on a visible light sensor for generating a visible light image of the same scene. Thermal imaging camera 100 captures the visible light image and/or the infrared image in response to depressing trigger control 112. In addition, thermal imaging camera 100 controls display 108 to display the infrared image and the visible light image generated by the camera, e.g., to help an operator thermally inspect a scene. Thermal imaging camera 100 may also include a focus mechanism coupled to infrared lens assembly 104 that is configured to move at least one lens of the infrared lens assembly so as to adjust the focus of an infrared image generated by the thermal imaging camera.

In operation, thermal imaging camera 100 detects heat patterns in a scene by receiving energy emitted in the infrared-wavelength spectrum from the scene and processing the infrared energy to generate a thermal image. Thermal imaging camera 100 may also generate a visible light image of the same scene by receiving energy in the visible light-wavelength spectrum and processing the visible light energy to generate a visible light image. As described in greater detail below, thermal imaging camera 100 may include an infrared camera module that is configured to capture an infrared image of the scene and a visible light camera module that is configured to capture a visible light image of the same scene. The infrared camera module may receive infrared radiation projected through infrared lens assembly 104 and generate therefrom infrared image data. The visible light camera module may receive light projected through visible light lens assembly 106 and generate therefrom visible light data.

In some examples, thermal imaging camera 100 collects or captures the infrared energy and visible light energy substantially simultaneously (e.g., at the same time) so that the visible light image and the infrared image generated by the camera are of the same scene at substantially the same time. In these examples, the infrared image generated by thermal imaging camera 100 is indicative of localized temperatures within the scene at a particular period of time while the visible light image generated by the camera is indicative of the same scene at the same period of time. In other examples, thermal imaging camera may capture infrared energy and visible light energy from a scene at different periods of time.

Visible light lens assembly 106 includes at least one lens that focuses visible light energy on a visible light sensor for generating a visible light image. Visible light lens assembly 106 defines a visible light optical axis which passes through the center of curvature of the at least one lens of the assembly. Visible light energy projects through a front of the lens and focuses on an opposite side of the lens. Visible light lens assembly 106 can include a single lens or a plurality of lenses (e.g., two, three, or more lenses) arranged in series. In addition, visible light lens assembly 106 can have a fixed focus or can include a focus adjustment mechanism for changing the focus of the visible light optics. In examples in which visible light lens assembly 106 includes a focus adjustment mechanism, the focus adjustment mechanism may be a manual adjustment mechanism or an automatic adjustment mechanism.

Infrared lens assembly 104 also includes at least one lens that focuses infrared energy on an infrared sensor for generating a thermal image. Infrared lens assembly 104 defines an infrared optical axis which passes through the center of curvature of lens of the assembly. During operation, infrared energy is directed through the front of the lens and focused on an opposite side of the lens. Infrared lens assembly 104 can include a single lens or a plurality of lenses (e.g., two, three, or more lenses), which may be arranged in series.

As briefly described above, thermal imaging camera 100 includes a focus mechanism for adjusting the focus of an infrared image captured by the camera. In the example shown in FIGS. 1 and 2, thermal imaging camera 100 includes focus ring 114. Focus ring 114 is operatively coupled (e.g., mechanically and/or electrically coupled) to at least one lens of infrared lens assembly 104 and configured to move the at least one lens to various focus positions so as to focus the infrared image captured by thermal imaging camera 100. Focus ring 114 may be manually rotated about at least a portion of housing 102 so as to move the at least one lens to which the focus ring is operatively coupled. In some examples, focus ring 114 is also operatively coupled to display 108 such that rotation of focus ring 114 causes at least a portion of a visible light image and at least a portion of an infrared image concurrently displayed on display 108 to move relative to one another. In different examples, thermal imaging camera 100 may include a manual focus adjustment mechanism that is implemented in a configuration other than focus ring 114.

In some examples, thermal imaging camera 100 may include an automatically adjusting focus mechanism in addition to or in lieu of a manually adjusting focus mechanism. An automatically adjusting focus mechanism may be operatively coupled to at least one lens of infrared lens assembly 104 and configured to automatically move the at least one lens to various focus positions, e.g., in response to instructions from thermal imaging camera 100. In one application of such an example, thermal imaging camera 100 may use laser 110 to electronically measure a distance between an object in a target scene and the camera, referred to as the distance-to-target. Thermal imaging camera 100 may then control the automatically adjusting focus mechanism to move the at least one lens of infrared lens assembly 104 to a focus position that corresponds to the distance-to-target data determined by thermal imaging camera 100. The focus position may correspond to the distance-to-target data in that the focus position may be configured to place the object in the target scene at the determined distance in focus. In some examples, the focus position set by the automatically adjusting focus mechanism may be manually overridden by an operator, e.g., by rotating focus ring 114.

Data of the distance-to-target, as measured by the laser 110, can be stored and associated with the corresponding captured image. For images which are captured using automatic focus, this data will be gathered as part of the focusing process. In some embodiments, the thermal imaging camera will also detect and save the distance-to-target data when an image is captured. This data may be obtained by the thermal imaging camera when the image is captured by using the laser 110 or, alternatively, by detecting the lens position and correlating the lens position to a known distance-to-target associated with that lens position. The distance-to-target data may be used by the thermal imaging camera 100 to direct the user to position the camera at the same distance from the target, such as by directing a user to move closer or further from the target based on laser measurements taken as the user repositions the camera, until the same distance-to-target is achieved as in an earlier image. The thermal imaging camera may further automatically set the lenses to the same positions as used in the earlier image, or may direct the user to reposition the lenses until the original lens settings are obtained.

During operation of thermal imaging camera 100, an operator may wish to view a thermal image of a scene and/or a visible light image of the same scene generated by the camera. For this reason, thermal imaging camera 100 may include a display. In the examples of FIGS. 1 and 2, thermal imaging camera 100 includes display 108, which is located on the back of housing 102 opposite infrared lens assembly 104 and visible light lens assembly 106. Display 108 may be configured to display a visible light image, an infrared image, and/or a composite image that is a simultaneous display of the visible light image and the infrared image. In different examples, display 108 may be remote (e.g., separate) from infrared lens assembly 104 and visible light lens assembly 106 of thermal imaging camera 100, or display 108 may be in a different spatial arrangement relative to infrared lens assembly 104 and/or visible light lens assembly 106. Therefore, although display 108 is shown behind infrared lens assembly 104 and visible light lens assembly 106 in FIG. 2, other locations for display 108 are possible.

Thermal imaging camera 100 can include a variety of user input media for controlling the operation of the camera and adjusting different settings of the camera. Example control functions may include adjusting the focus of the infrared and/or visible light optics, opening/closing a shutter, capturing an infrared and/or visible light image, or the like. In the example of FIGS. 1 and 2, thermal imaging camera 100 includes a depressible trigger control 112 for capturing an infrared and visible light image, and buttons 116, which form part of the user interface, for controlling other aspects of the operation of the camera. A different number or arrangement of user input media are possible, and it should be appreciated that the disclosure is not limited in this respect. For example, thermal imaging camera 100 may include a touch screen display 108 which receives user input by depressing different portions of the screen.

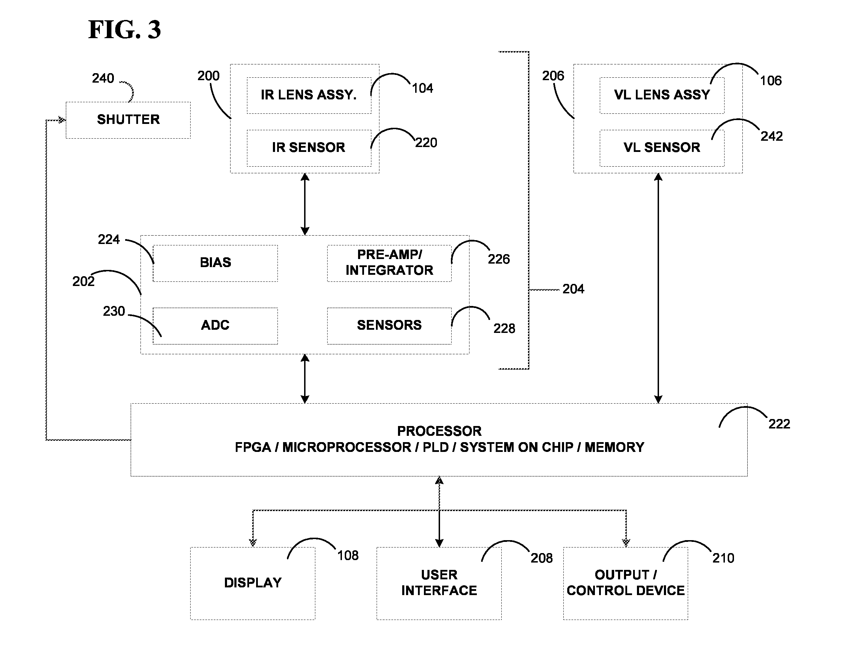

FIG. 3 is a functional block diagram illustrating components of an example of thermal imaging camera 100. Thermal imaging camera 100 includes an IR camera module 200, front end circuitry 202. The IR camera module 200 and front end circuitry 202 are sometimes referred to in combination as front end stage or front end components 204 of the infrared camera 100. Thermal imaging camera 100 may also include a visible light camera module 206, a display 108, a user interface 208, and an output / control device 210.

Infrared camera module 200 may be configured to receive infrared energy emitted by a target scene and to focus the infrared energy on an infrared sensor for generation of infrared energy data, e.g., that can be displayed in the form of an infrared image on display 108 and/or stored in memory. Infrared camera module 200 can include any suitable components for performing the functions attributed to the module herein. In the example of FIG. 3, infrared camera module 200 is illustrated as including infrared lens assembly 104 and infrared sensor 220. As described above with respect to FIGS. 1 and 2, infrared lens assembly 104 includes at least one lens that takes infrared energy emitted by a target scene and focuses the infrared energy on infrared sensor 220. Infrared sensor 220 responds to the focused infrared energy by generating an electrical signal that can be converted and displayed as an infrared image on display 108.

Infrared lens assembly 104 can have a variety of different configurations. In some examples, infrared lens assembly 104 defines an F-number (which may also be referred to as a focal ratio or F-stop) of a specific magnitude. An approximate F-number may be determined by dividing the effective focal length of a lens assembly by a diameter of an entrance to the lens assembly (e.g., an outermost lens of infrared lens assembly 104), which may be indicative of the amount of infrared radiation entering the lens assembly. In general, increasing the F-number of infrared lens assembly 104 may increase the depth-of field, or distance between nearest and farthest objects in a target scene that are in acceptable focus, of the lens assembly. An increased depth of field may help achieve acceptable focus when viewing different objects in a target scene with the infrared optics of thermal imaging camera 100 set at a hyperfocal position. If the F-number of infrared lens assembly 104 is increased too much, however, the diffraction effects will decrease spatial resolution (e.g., clarity) such that a target scene may not be in acceptable focus. An increased F-number may also reduce the thermal sensitivity (e.g., the noise-equivalent temperature difference will worsen).

Infrared sensor 220 may include one or more focal plane arrays (FPA) that generate electrical signals in response to infrared energy received through infrared lens assembly 104. Each FPA can include a plurality of infrared sensor elements including, e.g., bolometers, photon detectors, or other suitable infrared sensor elements. In operation, each sensor element, which may each be referred to as a sensor pixel, may change an electrical characteristic (e.g., voltage or resistance) in response to absorbing infrared energy received from a target scene. In turn, the change in electrical characteristic can provide an electrical signal that can be received by a processor 222 and processed into an infrared image displayed on display 108.

For instance, in examples in which infrared sensor 220 includes a plurality of bolometers, each bolometer may absorb infrared energy focused through infrared lens assembly 104 and increase in temperature in response to the absorbed energy. The electrical resistance of each bolometer may change as the temperature of the bolometer changes. With each detector element functioning as a pixel, a two-dimensional image or picture representation of the infrared radiation can be further generated by translating the changes in resistance of each detector element into a time-multiplexed electrical signal that can be processed for visualization on a display or storage in memory (e.g., of a computer). Processor 222 may measure the change in resistance of each bolometer by applying a current (or voltage) to each bolometer and measure the resulting voltage (or current) across the bolometer. Based on these data, processor 222 can determine the amount of infrared energy emitted by different portions of a target scene and control display 108 to display a thermal image of the target scene.

Independent of the specific type of infrared sensor elements included in the FPA of infrared sensor 220, the FPA array can define any suitable size and shape. In some examples, infrared sensor 220 includes a plurality of infrared sensor elements arranged in a grid pattern such as, e.g., an array of sensor elements arranged in vertical columns and horizontal rows. In various examples, infrared sensor 220 may include an array of vertical columns by horizontal rows of, e.g., 16 x 16, 50 x 50, 160 x 120, 120 x 160, or 650 x 480. In other examples, infrared sensor 220 may include a smaller number of vertical columns and horizontal rows (e.g., 1 x 1), a larger number vertical columns and horizontal rows (e.g., 1000 x 1000), or a different ratio of columns to rows.

In certain embodiments a Read Out Integrated Circuit (ROIC) is incorporated on the IR sensor 220. The ROIC is used to output signals corresponding to each of the pixels. Such ROIC is commonly fabricated as an integrated circuit on a silicon substrate. The plurality of detector elements may be fabricated on top of the ROIC, wherein their combination provides for the IR sensor 220. In some embodiments, the ROIC can include components discussed elsewhere in this disclosure (e.g. an analog-to-digital converter (ADC)) incorporated directly onto the FPA circuitry. Such integration of the ROIC, or other further levels of integration not explicitly discussed, should be considered within the scope of this disclosure.

As described above, the IR sensor 220 generates a series of electrical signals corresponding to the infrared radiation received by each infrared detector element to represent a thermal image. A "frame" of thermal image data is generated when the voltage signal from each infrared detector element is obtained by scanning all of the rows that make up the IR sensor 220. Again, in certain embodiments involving bolometers as the infrared detector elements, such scanning is done by switching a corresponding detector element into the system circuit and applying a bias voltage across such switched-in element. Successive frames of thermal image data are generated by repeatedly scanning the rows of the IR sensor 220, with such frames being produced at a rate sufficient to generate a video representation (e.g. 30 Hz, or 60 Hz) of the thermal image data.

The front end circuitry 202 includes circuitry for interfacing with and controlling the IR camera module 200. In addition, the front end circuitry 202 initially processes and transmits collected infrared image data to a processor 222 via a connection therebetween. More specifically, the signals generated by the IR sensor 220 are initially conditioned by the front end circuitry 202 of the thermal imaging camera 100. In certain embodiments, as shown, the front end circuitry 202 includes a bias generator 224 and a pre-amp/integrator 226. In addition to providing the detector bias, the bias generator 224 can optionally add or subtract an average bias current from the total current generated for each switched-in detector element. The average bias current can be changed in order (i) to compensate for deviations to the entire array of resistances of the detector elements resulting from changes in ambient temperatures inside the thermal imaging camera 100 and (ii) to compensate for array-to-array variations in the average detector elements of the IR sensor 220. Such bias compensation can be automatically controlled by the thermal imaging camera 100 or software, or can be user controlled via input to the output/control device 210 or processor 222. Following provision of the detector bias and optional subtraction or addition of the average bias current, the signals can be passed through a pre-amp/integrator 226. Typically, the pre-amp/integrator 226 is used to condition incoming signals, e.g., prior to their digitization. As a result, the incoming signals can be adjusted to a form that enables more effective interpretation of the signals, and in turn, can lead to more effective resolution of the created image. Subsequently, the conditioned signals are sent downstream into the processor 222 of the thermal imaging camera 100.

In some embodiments, the front end circuitry 202 can include one or more additional elements for example, additional sensors 228 or an ADC 230. Additional sensors 228 can include, for example, temperature sensors, visual light sensors (such as a CCD), pressure sensors, magnetic sensors, etc. Such sensors can provide additional calibration and detection information to enhance the functionality of the thermal imaging camera 100. For example, temperature sensors can provide an ambient temperature reading near the IR sensor 220 to assist in radiometry calculations. A magnetic sensor, such as a Hall Effect sensor, can be used in combination with a magnet mounted on the lens to provide lens focus position information. Such information can be useful for calculating distances, or determining a parallax offset for use with visual light scene data gathered from a visual light sensor.

An ADC 230 can provide the same function and operate in substantially the same manner as discussed below, however its inclusion in the front end circuitry 202 may provide certain benefits, for example, digitization of scene and other sensor information prior to transmittal to the processor 222 via the connection therebetween. In some embodiments, the ADC 230 can be integrated into the ROIC, as discussed above, thereby eliminating the need for a separately mounted and installed ADC 230.

In some embodiments, front end components can further include a shutter 240. A shutter 240 can be externally or internally located relative to the lens and operate to open or close the view provided by the IR lens assembly 104. As is known in the art, the shutter 240 can be mechanically positionable, or can be actuated by an electro-mechanical device such as a DC motor or solenoid. Embodiments of the invention may include a calibration or setup software implemented method or setting which utilize the shutter 240 to establish appropriate bias levels for each detector element.

Components described as processors within thermal imaging camera 100, including processor 222, may be implemented as one or more processors, such as one or more microprocessors, digital signal processors (DSPs), application specific integrated circuits (ASICs), field programmable gate arrays (FPGAs), programmable logic circuitry, or the like, either alone or in any suitable combination. Processor 222 may also include memory that stores program instructions and related data that, when executed by processor 222, cause thermal imaging camera 100 and processor 222 to perform the functions attributed to them in this disclosure. Memory may include any fixed or removable magnetic, optical, or electrical media, such as RAM, ROM, CD-ROM, hard or floppy magnetic disks, EEPROM, or the like. Memory may also include a removable memory portion that may be used to provide memory updates or increases in memory capacities. A removable memory may also allow image data to be easily transferred to another computing device, or to be removed before thermal imaging camera 100 is used in another application. Processor 222 may also be implemented as a System on Chip that integrates all components of a computer or other electronic system into a single chip. These elements manipulate the conditioned scene image data delivered from the front end stages 204 in order to provide output scene data that can be displayed or stored for use by the user. Subsequently, the processor 222 (processing circuitry) sends the processed data to a display 108 or other output/control device 210.

During operation of thermal imaging camera 100, processor 222 can control infrared camera module 200 to generate infrared image data for creating an infrared image. Processor 222 can generate a digital "frame" of infrared image data. By generating a frame of infrared image data, processor 222 captures an infrared image of a target scene at a given point in time.

Processor 222 can capture a single infrared image or "snap shot" of a target scene by measuring the electrical signal of each infrared sensor element included in the FPA of infrared sensor 220 a single time. Alternatively, processor 222 can capture a plurality of infrared images of a target scene by repeatedly measuring the electrical signal of each infrared sensor element included in the FPA of infrared sensor 220. In examples in which processor 222 repeatedly measures the electrical signal of each infrared sensor element included in the FPA of infrared sensor 220, processor 222 may generate a dynamic thermal image (e.g., a video representation) of a target scene. For example, processor 222 may measure the electrical signal of each infrared sensor element included in the FPA at a rate sufficient to generate a video representation of thermal image data such as, e.g., 30 Hz or 60 Hz. Processor 222 may perform other operations in capturing an infrared image such as sequentially actuating a shutter 240 to open and close an aperture of infrared lens assembly 104, or the like.

With each sensor element of infrared sensor 220 functioning as a sensor pixel, processor 222 can generate a two-dimensional image or picture representation of the infrared radiation from a target scene by translating changes in an electrical characteristic (e.g., resistance) of each sensor element into a time-multiplexed electrical signal that can be processed, e.g., for visualization on display 108 and/or storage in memory. Processor 222 may perform computations to convert raw infrared image data into scene temperatures (radiometry) including, in some examples, colors corresponding to the scene temperatures.

Processor 222 may control display 108 to display at least a portion of an infrared image of a captured target scene. In some examples, processor 222 controls display 108 so that the electrical response of each sensor element of infrared sensor 220 is associated with a single pixel on display 108. In other examples, processor 222 may increase or decrease the resolution of an infrared image so that there are more or fewer pixels displayed on display 108 than there are sensor elements in infrared sensor 220. Processor 222 may control display 108 to display an entire infrared image (e.g., all portions of a target scene captured by thermal imaging camera 100) or less than an entire infrared image (e.g., a lesser port of the entire target scene captured by thermal imaging camera 100). Processor 222 may perform other image processing functions, as described in greater detail below.

Independent of the specific circuitry, thermal imaging camera 100 may be configured to manipulate data representative of a target scene so as to provide an output that can be displayed, stored, transmitted, or otherwise utilized by a user.

Thermal imaging camera 100 includes visible light camera module 206. Visible light camera module 206 may be configured to receive visible light energy from a target scene and to focus the visible light energy on a visible light sensor for generation of visible light energy data, e.g., that can be displayed in the form of a visible light image on display 108 and/or stored in memory. Visible light camera module 206 can include any suitable components for performing the functions attributed to the module herein. In the example of FIG. 3, visible light camera module 206 is illustrated as including visible light lens assembly 106 and visible light sensor 242. As described above with respect to FIGS. 1 and 2, visible light lens assembly 106 includes at least one lens that takes visible light energy emitted by a target scene and focuses the visible light energy on visible light sensor 242. Visible light sensor 242 responds to the focused energy by generating an electrical signal that can be converted and displayed as a visible light image on display 108.

Visible light sensor 242 may include a plurality of visible light sensor elements such as, e.g., CMOS detectors, CCD detectors, PIN diodes, avalanche photo diodes, or the like. The number of visible light sensor elements may be the same as or different than the number of infrared light sensor elements.

In operation, optical energy received from a target scene may pass through visible light lens assembly 106 and be focused on visible light sensor 242. When the optical energy impinges upon the visible light sensor elements of visible light sensor 242, photons within the photodetectors may be released and converted into a detection current. Processor 222 can process this detection current to form a visible light image of the target scene.

During use of thermal imaging camera 100, processor 222 can control visible light camera module 206 to generate visible light data from a captured target scene for creating a visible light image. The visible light data may include luminosity data indicative of the color(s) associated with different portions of the captured target scene and/or the magnitude of light associated with different portions of the captured target scene. Processor 222 can generate a "frame" of visible light image data by measuring the response of each visible light sensor element of thermal imaging camera 100 a single time. By generating a frame of visible light data, processor 222 captures visible light image of a target scene at a given point in time. Processor 222 may also repeatedly measure the response of each visible light sensor element of thermal imaging camera 100 so as to generate a dynamic thermal image (e.g., a video representation) of a target scene, as described above with respect to infrared camera module 200.

With each sensor element of visible light camera module 206 functioning as a sensor pixel, processor 222 can generate a two-dimensional image or picture representation of the visible light from a target scene by translating an electrical response of each sensor element into a time-multiplexed electrical signal that can be processed, e.g., for visualization on display 108 and/or storage in memory.

Processor 222 may control display 108 to display at least a portion of a visible light image of a captured target scene. In some examples, processor 222 controls display 108 so that the electrical response of each sensor element of visible light camera module 206 is associated with a single pixel on display 108. In other examples, processor 222 may increase or decrease the resolution of a visible light image so that there are more or fewer pixels displayed on display 108 than there are sensor elements in visible light camera module 206. Processor 222 may control display 108 to display an entire visible light image (e.g., all portions of a target scene captured by thermal imaging camera 100) or less than an entire visible light image (e.g., a lesser port of the entire target scene captured by thermal imaging camera 100).

As noted above, processor 222 may be configured to determine a distance between thermal imaging camera 100 and an object in a target scene captured by a visible light image and/or infrared image generated by the camera. Processor 222 may determine the distance based on a focus position of the infrared optics associated with the camera. For example, processor 222 may detect a position (e.g., a physical position) of a focus mechanism associated with the infrared optics of the camera (e.g., a focus position associated with the infrared optics) and determine a distance-to-target value associated with the position. Processor 222 may then reference data stored in memory that associates different positions with different distance-to-target values to determine a specific distance between thermal imaging camera 100 and the object in the target scene.

In these and other examples, processor 222 may control display 108 to concurrently display at least a portion of the visible light image captured by thermal imaging camera 100 and at least a portion of the infrared image captured by thermal imaging camera 100. Such a concurrent display may be useful in that an operator may reference the features displayed in the visible light image to help understand the features concurrently displayed in the infrared image, as the operator may more easily recognize and distinguish different real-world features in the visible light image than the infrared image. In various examples, processor 222 may control display 108 to display the visible light image and the infrared image in side-by-side arrangement, in a picture-in-picture arrangement, where one of the images surrounds the other of the images, or any other suitable arrangement where the visible light and the infrared image are concurrently displayed.

For example, processor 222 may control display 108 to display the visible light image and the infrared image in a composite image. In a composite, the visible light image and the infrared image may be superimposed on top of one another. An operator may interact with user interface 208 to control the transparency or opaqueness of one or both of the images displayed on display 108. For example, the operator may interact with user interface 208 to adjust the infrared image between being completely transparent and completely opaque and also adjust the visible light image between being completely transparent and completely opaque. Such an example composite image, which may constitute an alpha-blended arrangement of the images, may allow an operator to adjust display 108 to display an infrared-only image, a visible light-only image, of any overlapping combination of the two images between the extremes of an infrared-only image and a visible light-only image. Processor 222 may also combine scene information with other data, such as radiometric data, alarm data, and the like in the composite image.

Additionally, in some embodiments, the processor 222 can interpret and execute commands from user interface 208, an output/control device 210. This can involve processing of various input signals and transferring those signals to the front end circuitry 202 via a connection therebetween. Components (e.g. motors, or solenoids) proximate the front end circuitry 202 can be actuated to accomplish the desired control function. Exemplary control functions can include adjusting the focus, opening/closing a shutter, triggering sensor readings, adjusting bias values, etc. Moreover, input signals may be used to alter the processing of the image data that occurs in the processor 222.

Processor can further include other components to assist with the processing and control of the infrared imaging camera 100. For example, as discussed above, in some embodiments, an ADC can be incorporated into the processor 222. In such a case, analog signals conditioned by the front-end stages 204 are not digitized until reaching the processor 222. Moreover, some embodiments can include additional on board memory for storage of processing command information and scene data, prior to transmission to the display 108 or the output/control device 210.

An operator may interact with thermal imaging camera 100 via user interface 208, which may include buttons, keys, or another mechanism for receiving input from a user. The operator may receive output from thermal imaging camera 100 via display 108. Display 108 may be configured to display an infrared-image and/or a visible light image in any acceptable palette, or color scheme, and the palette may vary, e.g., in response to user control. In some examples, display 108 is configured to display an infrared image in a monochromatic palette such as grayscale or amber. In other examples, display 108 is configured to display an infrared image in a color palette such as, e.g., ironbow, blue-red, or other high contrast color scheme. Combination of grayscale and color palette displays are also contemplated.

While processor 222 can control display 108 to concurrently display at least a portion of an infrared image and at least a portion of a visible light image in any suitable arrangement, a picture-in-picture arrangement may help an operator to easily focus and/or interpret a thermal image by displaying a corresponding visible image of the same scene in adjacent alignment.

A power supply (not shown) delivers operating power to the various components of thermal imaging camera 100 and, in some examples, may include a rechargeable or non-rechargeable battery and a power generation circuit.

During operation of thermal imaging camera 100, processor 222 controls infrared camera module 200 and visible light camera module 206 with the aid of instructions associated with program information that is stored in memory to generate a visible light image and an infrared image of a target scene. Processor 222 further controls display 108 to display the visible light image and/or the infrared image generated by thermal imaging camera 100.

Thermal imagers that use microbolometer focal plane arrays are known to exhibit "ghosting" artifacts when exposed to hot targets (e.g. the sun). This effect is similar in nature to when one looks at an intense light and then looks away - often there may be a residual image of the light that fades with time. Such is the case with microbolometer thermal imagers. Intense infrared radiation may cause a target to 'burn' an image artifact into the sensors such that when the camera looks elsewhere to a less intense scene, a residual image, or ghost artifact, remains for a time due to the effect on the sensors, skewing the thermal image data and appearing as a temperature slightly divergent from the true temperature. While this effect is more salient when changing views from a scene of intense radiation to a less intense one, the error may still be present at the more intense scene. Accordingly, regardless of the temperature of the target in a thermal scene, any ghosting artifacts that have developed may cause thermal measurement errors and/or objectionable thermal image artifacts.

Typically the ghost artifact slowly decays away over a period of several minutes after the hot item has been removed from the field of view. One known method of minimizing the severity of ghosting artifacts is to increase the frequency of shutter actuation for a period of time after a hot target has been detected in the field of view. However, the more-frequent shutter events are a nuisance for the user, and this method is not possible with the shutterless thermal imagers that are emerging. Certain embodiments of the present invention provide a system, apparatus, algorithm, and/or method of detecting and removing hot-target artifacts from thermal imagery.

In some embodiments, thermal imagers may only accumulate perceptible ghosting artifacts when a target temperature is above a certain threshold, otherwise maintaining accurate measurement until this threshold is crossed. Thermal imagers can detect when the target scene constitutes a hot target by comparing each pixel reading to an appropriate threshold. The comparison can be done on raw or corrected readings, such as an image representation of incident infrared radiation or a radiometric temperature measurement. The comparison test could occur for every pixel and in every frame. Once a hot target is detected at a particular pixel, certain approaches or algorithms could be used to determine how much correction is needed for any particular pixel. In certain embodiments of the invention, the thermal imager could employ an algorithm that counts the number of frames that elapse over a given time period with a hot target present (e.g., where any pixel reading exceeds the threshold). In certain other embodiments of the invention, the thermal imager could employ an algorithm that integrates the pixel data during the period the hot target is present, since this could then provide for correction of different levels of hot targets (e.g. hot vs. really hot). The individual pixel corrections could be combined to create a table of correction values that is applied to each frame of data prior to displaying the imagery. Since the ghost artifact slowly decays away after the hot target is removed from the field of view, the correction value for each pixel would need to be appropriately "decayed" away on a corresponding, appropriate time scale, e.g., for each pixel, the correction level would accumulate while a hot target is present and then be slowly decremented when the hot target is no longer present at that location. The magnitude of the correction and the decay rate (and its functional form) would be determined during an appropriate factory calibration process where the camera is shown a series of varying hot targets and the magnitude and decay rate of the resulting artifacts are characterized.

Certain embodiments mentioned previously may include counting the number of frames a particular pixel reads higher than some threshold value. For each frame above said threshold, the device will assume some amount of offset, or measurement error, has been established within the pixel and can internally compensate for this amount prior to displaying or capturing an image. Here and throughout this disclosure "offset" is taken to merely mean error and does not limit the nature of the error to necessarily being one of additive, multiplicative, or the like; nor does it imply that the error is necessarily positive or negative in sign.

In more advanced embodiments, the processor 222 will again monitor when a pixel reads a thermal value higher than some threshold, but will further perform an integral of this value, the temperature, and/or the power incident on said pixel over time depending on the abilities and functionality of the camera. The resulting value from this integral may correspond to the amount of thermal offset associated with that particular pixel, and thus the offset can be removed by the device prior to imagery display to correct for ghosting artifacts. Removal of this offset may be done in many ways, including but not limited to subtraction and multiplication. This method is more advanced because it accounts for the degree to which the thermal value read by a pixel exceeds the threshold value, allowing for this information to be used to more accurately predict any offset instilled into the pixel.

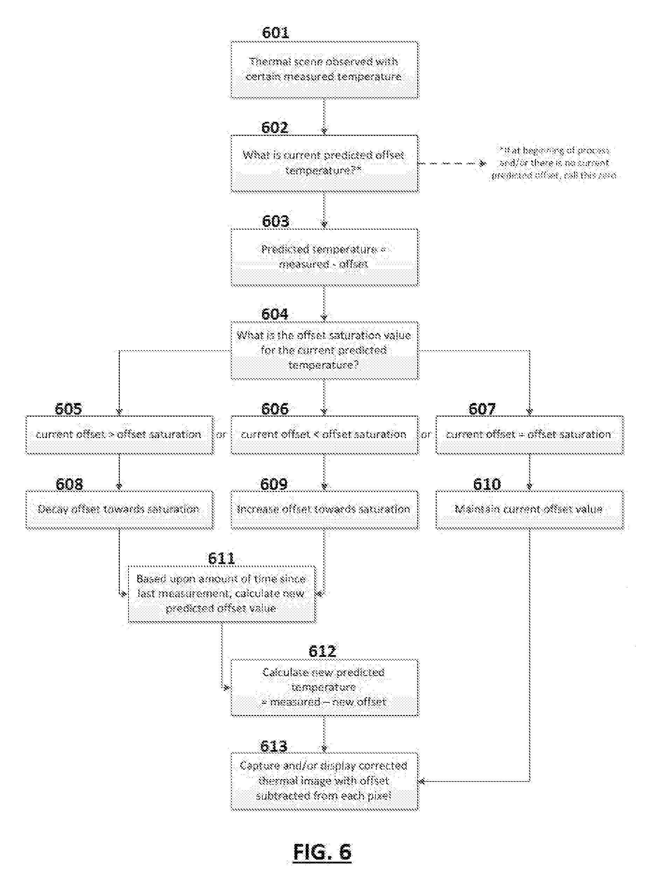

Yet another embodiment of the invention involves a functional model of how the offset will accumulate over time and a saturation offset value associated with each measured temperature that the offset will approach over time. This embodiment may include a timing element that begins counting when the imaging device senses a significant change in the temperature associated with a given pixel, causing its saturation offset to shift. The device anticipates via a functional model how the offset temperature will approach the saturation value over time, and thus has an estimate for the value of the temperature offset at any time after a temperature change is sensed on any given pixel. This type of model is exemplified in FIGS. 6-8, and can simply be repeated whenever a significant temperature change is sensed, restarting the timer and approaching a new offset saturation value.

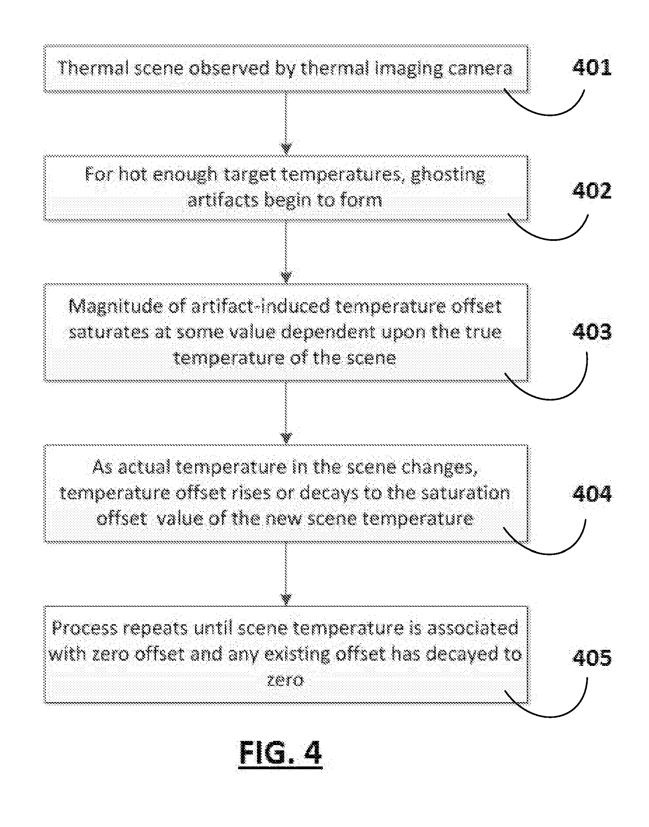

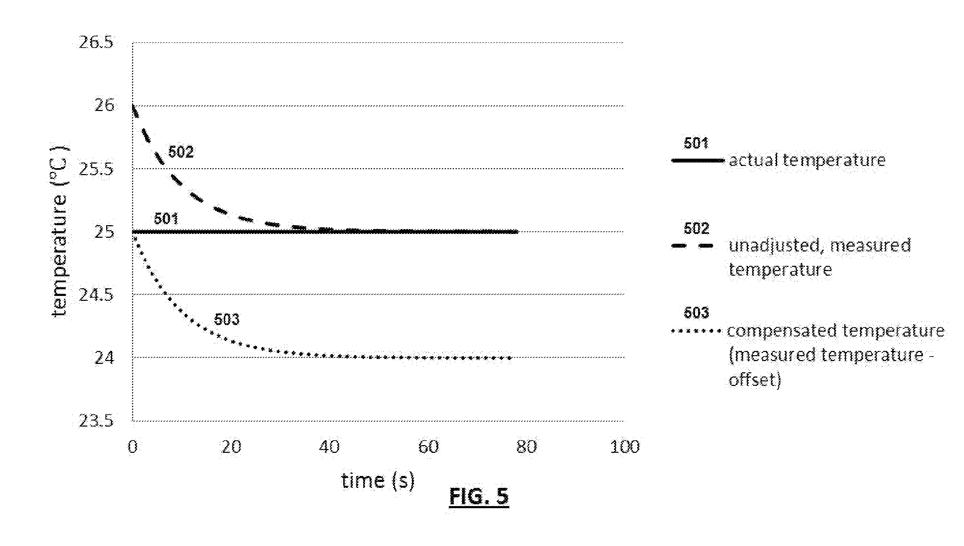

A typical process of thermal image capture including hot-target ghosting and a temperature-dependent saturation offset due to ghosting is outlined in FIG. 4. As a thermal scene is imaged by a thermal imaging camera 401, perceptible ghosting artifacts may begin to form 402 if an element within the target scene is above a particular temperature. This ghosting artifact may cause a temperature measurement to accumulate some inaccuracy and/or a thermal image artifact to appear, as the temperature measurement or thermal imagery displayed may comprise the true target temperature measurement plus some accumulated offset. This offset may approach some saturation value for a given target temperature, causing the offset value to trend towards this saturation value 403 whenever the two are not equal. Once the hot target is removed, the amount of thermal offset each pixel has acquired over time remains. With the hot target no longer in the frame, the offset ceases to increase and instead decays towards zero, at which point the sensed temperature in the device will match the true temperature of the object in the frame. If the hot target is instead replaced with another hot target of a different temperature, instead of decaying towards zero offset, the offset will rise or decay 404 towards the saturation offset value of the new scene temperature. This process repeats 405 until the target temperature is associated with a zero offset and any existing offset decays to zero. Because of this decay of the ghosting, and also due to any target temperature dependence of offset saturation values, the processor 222 changes the amount of compensation, in many cases, for each pixel, over time. FIG. 5 illustrates this need in relation to the removal of a hot target from a scene. FIGS. 6-8 will detail the effect of temperature-dependent offset values.

FIG. 5 is an exemplary plot of a true target temperature, a measured temperature, and a compensated temperature vs. time in which the compensated temperature does not account for possible changes in the offset value. It shows, for a single pixel, the actual temperature 501 of the imaged scene, the unadjusted measured temperature 502 sensed by the device including ghosting artifacts, and the value of the compensated temperature 503 the device would display while correcting for a single, static offset temperature upon the removal of a hot object from the scene at t=0. As is shown, near the time when the hot target is removed, the offset correction improves the accuracy of the measurement, bringing the actual 501 and compensated 503 temperatures closer together. After a period of time has passed, however, it can be seen that as the offset due to ghosting artifacts decays, the offset correction actually degrades the accuracy of the device, as the compensated temperature 503 is further from the actual temperature 501 than is the unadjusted, measured temperature 502. Therefore, not only is the determination of the magnitude of the ghosting artifacts important, it is equally important for an accurate image or temperature measurement to adjust the offset over time to match the changing of the ghosting artifact.

It is also worthwhile to note that if the targeted scene changes from one hot target to another for which there is a different saturation value, the offset may rise or decay towards this new value. In this case, a procedure such as the one outlined in FIG. 6 may be implemented to compensate for (e.g., eliminate) a changing offset value during a thermal measurement, illustrating the procedure as it may be performed during a radiometric measurement. The procedure may be implemented via the processor 222 as described above. The process involves predicting an offset value associated with the current frame 602, assuming no offset when the process first begins. This predicted offset may be used in conjunction with the measured temperature from the thermal imaging camera to calculate a predicted temperature 603. This predicted temperature may have an associated offset saturation value 604 which can be compared to the currently predicted offset value 605, 606, and/or 607. Depending on how the predicted offset of the current frame compares to the saturation offset, the predicted offset is changed 608 or 609 for the next frame so as to approach the saturation value, the change following some time-dependent model of offset behavior 611. If the predicted offset has changed, a new predicted temperature is calculated 612 for display in the subsequent frame. However, if the predicted offset is equal to the saturation offset temperature 607, the predicted offset does not change 610 for the subsequent frame. Finally, a corrected thermal image is captured and/or displayed, subtracting the predicted offset from the image to arrive at an offset-free thermal scene. As time progresses and the next frame is captured, the process repeats, with the predicted offset approaching the saturation value. Methods of offset removal other than subtraction are also applicable and appropriate in the method described above.

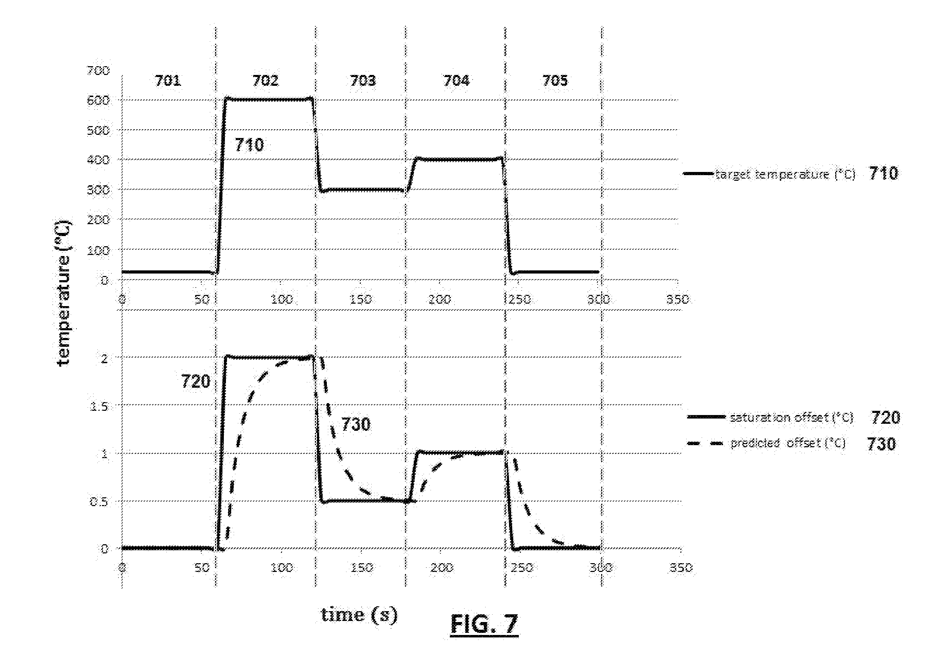

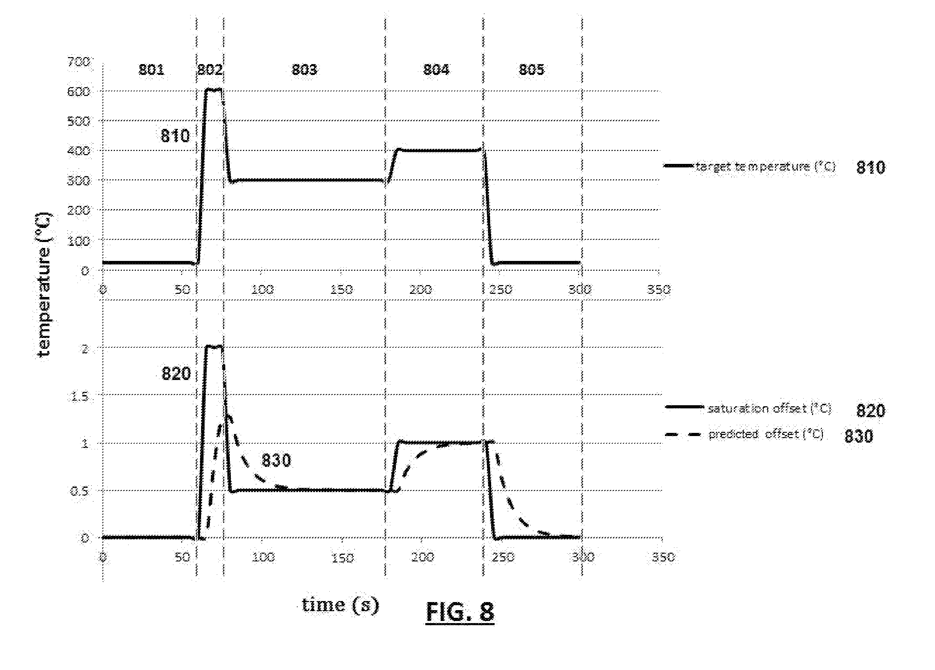

FIGS. 7 and 8 show graphically a potential model for predicting offset behavior, where plots of target temperature vs. time are shown along with the corresponding saturation offset vs. time plots below. Overlaid on these saturation offset plots are models of a predicted offset temperature vs. time in each case. It should be noted that any values used in these figures are merely exemplary and are present to aid in the description of thereof. They do not necessarily represent true values for any device. In practice, elements such as possible saturation offset values and the time-dependent model of offset progression may be determined in a laboratory or factory and programmed into the camera prior to distribution to user. In various embodiments, the offset saturation values may be calculated or found in a lookup table based upon the predicted temperature of a given scene. Additionally, the offset rise and/or decay may be fit to many different functions, including but not limited in any way to linear and exponential functions, which may include a temperature-independent time constant.

It will be appreciated by those skilled in the art that the camera may include memory in which it may track and store historical measurement and offset data for future use. Such data may include the time required for a pixel to reach saturation or to come within a certain proximity of saturation, how long a pixel has remained at or near saturation values, or if any pixels have exceeded a saturation value. In some embodiments the camera may contain processing means to interpret this stored data and adjust camera behavior accordingly, such as adjusting modeling parameters corresponding to how an offset approaches saturation or adjusting the saturation values associated with thermal measurements.

In the illustrative example of FIG. 7, there is time enough spent imaging each temperature such that the predicted offset 730 very nearly reaches the saturation offset 720 for each given temperature 710. The vertical dashed lines separate time segments 701, 702, 703, 704, and 705. In time segment 701, the target temperature 710 is low and the saturation offset 720 is effectively zero. Once time segment 702 is reached, however, there enters a hot target of 600°C into the scene with a corresponding saturation offset 720 temperature of 2°C. The predicted offset 730 climbs from 0°C towards 2°C until the end of time segment 702 is reached, at which time the target temperature 710 is reduced to 300°C, with a corresponding saturation offset 720 of 0.5°C. At this point, the predicted offset 730 decays from its current value, in this case near 2°C, towards the saturation offset 720 associated with the current temperature, here 0.5°C. This process continues during each of time segments 703, 704, and 705, with the predicted offset 730 value climbing or decaying from the value at the end of the previous time segment toward the saturation offset 720 value of the current time segment. After the end of time segment 704, through and beyond time segment 705, the saturation offset 720 is 0°C, and so the true predicted offset 730 decays toward roughly 0°C until eventually there is no measureable predicted offset 730.

In contrast, in the illustrative example of FIG. 8, the camera images the hottest target for a shorter amount of time than is necessary for the predicted offset 830 to approach saturation 820. Again the temperature 810 during the first time segment 801 is such that the saturation offset 820 is near zero and there is zero predicted offset 830. At the beginning of time segment 802, a hot target of 600°C is sensed by a particular pixel. In this example, as with the previous one, the corresponding saturation offset 820 temperature is 2°C. During time segment 802, the predicted offset 830 temperature climbs towards saturation 820 as it did in FIG. 7, however, time segment 802 is shorter than was time segment 702, and ends before the predicted offset 830 temperature approaches the saturation 820 value. At the end of time segment 802 and beginning of time segment 803, the target temperature 810 changes to 300°C with a corresponding saturation offset 820 value of 0.5°C. When this change in target temperature 810 occurs, the predicted offset 830 value immediately begins to decay from its current state, which is just above 1.25°C, to the saturation offset 820 of 0.5°C. The transitions from time segments 803 to 804, and 804 to 805 are similar to those from time segments 703 to 704, and 704 to 705 described above. Once again, after time segment 805, the predicted offset 830 temperature will continue to decay towards zero, the saturation offset 820 value for the given target temperature 810 of 25°C.

Thus, in these examples, the predicted temperature offset value changes over time, always either rising or decaying to the saturation offset temperature associated with the current target temperature. This overcomes the shortcomings of a constant predicted offset value illustrated in FIG. 5. Furthermore, this trending of the offset value towards saturation begins immediately when a new offset saturation value is predicted. It should be noted that the offset described in conjunction with these figures and throughout this disclosure is not limited to any particular type of error, such as additive or multiplicative. Rather, it is merely indicative of some deviation between a true and a measured thermal value. Additionally, while FIGS. 5-8 describe situations in which a temperature is being measured, the processes and situations described could also apply to a thermal measurement taken without calculating temperature data. In this case, a saturation value could apply to whatever metric is being analyzed within the heat pattern, such as incident power, for example.

An illustrative radiometric embodiment of a thermal imaging device that compensates for these ghosting effects is described below; however, embodiments of the invention need not be radiometric and may measure thermal data other than absolute temperature. A thermal imaging device with memory and at least one processor is programmed to associate a particular saturation offset temperature with any given temperature of a measured scene. This association process may comprise a lookup table, an equation, or any other sort of process known in the art. The thermal imaging device further comprises a timing mechanism and is programmed with a time-dependent equation describing offset behavior. At the beginning of device use, it is assumed there is no appreciable offset associated to any pixel within the camera. After beginning operation, for each frame, the camera detects temperature data for each pixel, with each temperature having a corresponding saturation offset temperature.

Once the camera detects, for any given pixel, a change in target temperature, it determines the associated saturation offset for the new temperature. Still referencing the beginning of operation, it is assumed there is no offset yet on the camera. As such, when the camera detects this change in temperature of the target scene, it also senses a change in saturation offset from zero to some new, potentially non-zero value, and initiates the timer. Using this new value and the original value of offset (which in this case is zero), the camera models the temporal change of the offset towards saturation. Prior to displaying the next frame, then, the camera uses this model to predict how the offset value will have changed between the time of sensing the new offset saturation and the time of capturing data for the next frame. Therefore, the camera and its processor can remove from the upcoming frame the predicted offset value at the time the data for a frame was captured, resulting in a corrected temperature value associated with that frame.

This process continues as the offset predicted by the camera progresses towards the saturation offset over time. Thus, at any given time during this process, the camera has a most-recent offset prediction value. Then, if at any point the camera senses another change in target scene temperature, it determines the new saturation offset value, reads the current predicted offset value, restarts the timer, and models the temporal changes of the offset as it approaches the new saturation value from its current value. This process repeats before every frame, with the timer resetting upon sensed temperature changes, until the target scene has zero offset associated therewith, and the camera has modeled the offset to have decayed to a substantially near-zero value.

In certain embodiments of the invention, the camera includes some threshold value that constitutes a meaningful change in the target temperature. If this is the case, then the timer will not be reset unless the sensed temperature change is greater than this threshold, thereby reducing or eliminating the possibility for an unnecessary reset due to normal noise levels incorporated into the pixel readings.

Predicted offset values may be removed from respective pixels and frames in various ways. In some embodiments, the processor may acquire a predicted offset value for each pixel and remove the predicted values from each pixel after the thermal image data has been generated from the IR sensing elements and prior to any display. In other embodiments, the aforementioned bias generator may receive instruction from processor, for example, to bias the IR sensing elements corresponding to a predicted offset. In this case, the sensing elements themselves are adjusted so that they produce an output signal representative of the true target temperature as opposed to a temperature with an incorporated offset value. Accordingly, in this embodiment, no additional offset compensation is necessary within the processor as described above. In addition to the examples listed above, it will be appreciated that, given a predicted offset value, there are many ways in which to adjust the thermal measurement of a thermal imaging camera in order to remove the offset.

Example thermal image cameras and related techniques have been described. The techniques described in this disclosure may also be embodied or encoded in a computer-readable medium, such as a non-transitory computer-readable storage medium containing instructions. Instructions embedded or encoded in a computer-readable storage medium may cause a programmable processor, or other processor, to perform the method, e.g., when the instructions are executed. Computer readable storage media may include random access memory (RAM), read only memory (ROM), a hard disk, optical media, or other computer readable media.

Again it shall be noted that any examples are meant for illustrating aspects of the disclosed invention. They do not limit the invention to the details herein described, as the descriptions provided are examples of particular embodiments of the invention. Various examples have been described. These and other examples are within the scope of the following claims.

## Claims

1. A method for eliminating hot-target ghosting effects in a thermal imaging device, comprising:
exposing the thermal imaging device to a thermal scene,
measuring a heat pattern across the scene,
generating thermal image data corresponding to said heat pattern,
predicting an amount of offset that will be incorporated into the thermal image data after a given time of exposing the thermal imaging device to the scene, and
removing said offset from the thermal image data.

2. The method of claim 1 further comprising the step of displaying the thermal image from the corrected thermal image data with the offset removed.

3. The method of any one of the preceding claims, wherein the thermal imaging device includes a focal plane array, FPA, comprised of an array of pixels, with said offset being predicted for and removed from each pixel.

4. The method of any one of the preceding claims, further comprising changing the amount of offset removed from the thermal image data over time.

5. The method of claim 4, wherein the removed offset amount may be changed before each time a new scene is captured.

6. The method of claim 4 or claim 5, wherein said change follows an exponential relationship with time, wherein said exponential relationship preferably comprises a temperature-independent time constant.

7. The method of any one of the preceding claims, wherein predicting the offset comprises a temporal integral of the thermal image data acquired by the camera during exposure to the scene.

8. The method of any one of the preceding claims, further comprising predicting and removing an offset value from every frame.

9. The method of any one of the preceding claims, further comprising a threshold level within the thermal image data below which it is assumed no offset accumulates, wherein the amount of offset is preferably proportional to the number of frames above said threshold level.

10. The method of any one of the preceding claims 1, further comprising a saturation offset level corresponding to each heat pattern measurement, wherein the saturation offset levels are preferably stored in a lookup table.

11. The method according to any one of the preceding claims, wherein the heat pattern is measured across the scene with a plurality of infrared sensing elements, and wherein the infrared sensing elements are biased in such a way so as to effectively remove the predicted offset from the generated thermal image data.

12. The method of any one of claims 1 to 10, wherein removing the offset from thermal image data comprises subtracting the predicted offset from the measured value.

13. A thermal imaging camera configured to measure a heat pattern across a thermal scene, the camera comprising:
at least one infrared sensor element configured to provide an electrical signal in response to receiving infrared energy corresponding to a heat pattern across the scene,
a processor for receiving said electrical signal from the at least one infrared sensor element and generating thermal image data from said signal, the processor also configured to:
predict an amount of offset that will be incorporated into the thermal image data after a given time of exposing the camera to the thermal scene, and
remove the predicted offset from the thermal image data.

14. The camera of claim 13, further configured to generate and display a thermal image from the thermal image data with the offset removed.

15. The camera of claim 13 or claim 14, wherein predicting the amount of offset comprises a saturation offset corresponding with each heat pattern measurement, wherein the camera preferably further comprises memory for storing at least one of historical offset data and a lookup table comprising saturation offset values.

16. The method of any one of claims 1 to 12 or the camera of any one of claims 13 to 15, wherein measuring the heat pattern of the scene comprises a radiometric measurement, wherein the offset preferably comprises a temperature offset.
